# FASCICULE DE BREVET EUROPEEN

(11) **EP 1 824 666 B1**
(45) Date de publication et mention de la délivrance du brevet: **15.07.2009**
(21) Numéro de dépôt: 05801613.0
(22) Date de dépôt: 09.11.2005
(51) Int. Cl.: B29D 30/16

(54) **APPAREIL DE FABRICATION D'UN RENFORCEMENT POUR PNEUMATIQUE**
VORRICHTUNG ZUR HERSTELLUNG EINER VERSTÄRKUNG FÜR EINEN LUFTREIFEN
APPLIANCE FOR PRODUCING A REINFORCEMENT FOR A PNEUMATIC TYRE

(30) Priorité: 12.11.2004 FR 0412108
(43) Date de publication de la demande: 29.08.2007
(73) Titulaire: Société de Technologie MICHELIN, 63000 Clermont-Ferrand (FR); Michelin Recherche et Technique S.A., 1463 Granges-Paccot (CH)
(72) Inventeur: MAYET, Jean-Claude, F-63000 Clermont-Ferrand (FR); BLATTEYRON, Emmanuel, F-63800 Cournon d'Auvergne (FR)
(74) Mandataire: Lasson, Cédric Y. M.
(86) Numéro de dépôt international: PCT/EP2005/055862
(87) Numéro de publication internationale: WO 2006/051082

(56) Documents cités:
- EP-A- 0 580 055
- EP-A- 0 962 304
- EP-A- 1 101 597
- EP-A- 1 447 209
- WO-A-03/055667
- PATENT ABSTRACTS OF JAPAN vol. 2002, no. 09, 4 septembre 2002 (2002-09-04) -& JP 2002 127268 A (BRIDGESTONE CORP), 8 mai 2002 (2002-05-08)

## Description

La présente invention concerne la fabrication des pneumatiques. Plus précisément, elle se rapporte à la mise en place, au cours de la confection, de fils pour constituer un renforcement du pneumatique. Plus particulièrement, elle propose des moyens et une méthode aptes à fabriquer un tel renforcement sur une forme proche ou identique de la forme de la cavité interne du pneumatique, c'est à dire sur une forme sensiblement toroïdale, supportant l'ébauche d'un pneumatique pendant sa fabrication.

Dans ce domaine technique, on connaît déjà des procédés et appareils qui permettent d'intégrer la fabrication des renforcements de pneumatique à l'assemblage du pneumatique lui-même. Cela signifie que, plutôt que de recourir à des produits semi-finis, comme des nappes de renforcement, on réalise un ou des renforcements *in situ,* au moment où l'on fabrique le pneumatique, et à partir d'une seule bobine de fil.

Parmi ces procédés et appareils, la solution décrite dans la demande de brevet EP 0 580 055 est tout particulièrement adaptée pour la réalisation de renforcements de carcasse ou de sommet sur un noyau, la surface extérieure de ce noyau correspondant sensiblement à la forme de la cavité interne du pneumatique final. On voit en particulier sur les figures de cette demande un appareillage dans lequel le fil, destiné à constituer un renforcement de carcasse, est posé en arceaux contigus sur un noyau rigide, par un oeillet fixé sur une chaîne montée sur des poulies de façon à suivre un parcours en forme de « C » chevauchant le noyau. L'oeillet effectue un mouvement de va-et-vient autour du noyau de façon à poser, progressivement et de façon contiguë, un arceau à chaque aller et un arceau à chaque retour. Des moyens presseurs appropriés interviennent pour appliquer les extrémités desdits arceaux au fur et à mesure sur le noyau rigide, le noyau étant prérevêtu de caoutchouc cru.

Par la demande de brevet EP 0 962 304, on connaît un autre appareil prévu également pour la réalisation de renforcements de carcasse sur un noyau dont la surface extérieure correspond sensiblement à la forme de la cavité interne du pneumatique final. Dans une première variante, on y voit un bras oscillant unique dont l'extrémité, supportant un organe de guidage comparable à l'oeillet évoqué ci-dessus, décrit des arcs de cercle. On peut se reporter à la figure 3 de ladite demande de brevet EP 0 962 304.

Par la demande de brevet EP 1 122 057, on connaît encore un autre appareil pour la réalisation de renforcements sur un noyau. Dans une première variante, on y voit un système de bras oscillants articulés entre eux et supportant un organe de guidage comparable à l'oeillet du document EP 0 580 055. Ce système est capable de décrire une trajectoire complexe, différente d'un arc de cercle. On peut se reporter à la figure 1 de ladite demande de brevet EP 1 122 057.

Avec ces appareils de l'état de la technique, une difficulté apparaît lorsque l'on veut poser des renforcements non radiaux, par exemple des renforcements de sommet croisés. On a remarqué que, lorsque le plan de pose présente un angle avec la direction radiale, le fonctionnement des moyens presseurs peut ne plus donner entière satisfaction, en particulier à l'une des extrémités des arceaux. Dans certaines conditions, les extrémités des arceaux (généralement en forme de boucles) peuvent parfois échapper aux moyens presseurs. Cette difficulté pourrait avoir plusieurs origines.

Une origine possible est le fait que l'inclinaison des renforcements implique une situation dissymétrique du point de vue des boucles créées aux extrémités des arceaux de part et d'autre du pneumatique. En effet, sur un côté du pneumatique la boucle se développe dans le même sens que l'avancement de la forme par rapport à la tête de pose, alors que sur l'autre côté du pneumatique, la formation de la boucle correspond à l'instant où la pose s'effectue à rebours par rapport à l'avancement de la forme.

Une autre origine possible de cette difficulté est l'inclinaison de l'axe du dispositif de pose (par rapport au plan médian du pneumatique). Cette inclinaison peut occasionner une dissymétrie de l'encombrement dudit dispositif de pose aux abords de la forme et ainsi limiter l'accessibilité des moyens presseurs au moins d'un côté de la forme.

Un objectif de la présente invention est donc de proposer des appareils capables de fonctionner selon le procédé général décrit dans la demande de brevet EP 0 580 055 précitée, et capables de réaliser une pose de renforcements inclinés à des cadences importantes sans préjudice de la précision et de la qualité de fonctionnement.

L'invention propose un appareil de fabrication d'un renforcement pour pneumatique comme défini dans la revendication 1, ledit appareil étant destiné à fabriquer un renforcement constitué à partir d'un fil délivré sensiblement en continu et à la demande par un distributeur approprié, ledit appareil étant destiné à être utilisé en coopération avec une forme sensiblement toroïdale sur laquelle on construit progressivement ledit renforcement en déposant des arceaux dudit fil selon une trajectoire souhaitée pour ledit fil à la surface de ladite forme, ledit appareil comprenant :
- un organe de guidage du fil dans lequel le fil peut coulisser,
- des moyens pour déplacer ledit organe de guidage en regard de la trajectoire souhaitée pour ledit fil,
- des premier et deuxième moyens presseurs disposés respectivement de part et d'autre de la forme et capable de venir maintenir le fil contre la forme sensiblement aux extrémités desdits arceaux,
- ledit appareil étant caractérisé en ce que les moyens presseurs comprennent, au moins d'un côté de la forme, un bras presseur rotatif dont le mouvement rotatif s'effectue entre une position repliée, éloignée de la forme et une position d'appui contre la forme.
   Des formes avantageuses de l'invention font l'objet des revendications dépendantes.

De préférence, la trajectoire est constituée d'allers et de retours sensiblement parallèles entre eux et formant un angle avec la direction circonférentielle de la forme, cet angle étant inférieur à 90°, de préférence inférieur à 45°.

De préférence, le bras presseur rotatif est mobile en rotation autour d'un axe sensiblement parallèle au plan médian de la forme et de préférence orienté sensiblement radialement.

Selon un mode de réalisation de l'invention, les moyens pour déplacer l'organe de guidage comprennent un balancier à mouvement alternatif de rotation autour d'un axe de balancier formant un angle avec le plan médian de la forme, cet angle étant sensiblement complémentaire de l'angle que forment les arceaux avec la direction circonférentielle de la forme. De préférence, le balancier étant monté pivotant sur une embase, les moyens presseurs disposés du côté de la forme où se situe ladite embase comprennent ledit bras presseur rotatif.

De préférence, un premier bras frappeur rotatif est en outre associé au bras presseur rotatif, ledit premier bras frappeur rotatif étant apte à frapper le fil lorsqu'il est maintenu contre la forme par le bras presseur. Avantageusement, ledit premier bras frappeur rotatif est disposé de manière à pouvoir frapper le fil contre la forme en un point de la forme situé radialement à l'extérieur du point de contact du bras presseur rotatif sur la forme lors de la pose d'un premier renforcement. Avantageusement encore, un deuxième bras frappeur rotatif est en outre associé au bras presseur rotatif, ledit deuxième bras frappeur rotatif étant disposé de manière à pouvoir frapper le fil en un point situé radialement à l'extérieur du point de contact du bras presseur rotatif lors de la pose d'un second renforcement, ledit second renforcement étant incliné sensiblement à l'inverse du premier renforcement.

Notons tout d'abord que le terme "fil" doit bien entendu être compris dans un sens tout à fait général, englobant un monofilament, un multifilament, un assemblage comme par exemple un câble ou un retors, ou un petit nombre de câbles ou retors groupés, et ceci quelle que soit la nature du matériau, et que le "fil" soit pré revêtu de caoutchouc ou non.

Dans le présent mémoire, on emploie le terme "arceau" pour désigner un tronçon de fil allant d'un point singulier à un autre dans l'armature de renforcement, par exemple d'un côté à l'autre de l'ébauche de pneumatique. L'ensemble de ces arceaux disposés sur tout le pourtour du pneumatique forme le renforcement proprement dit. Un arceau au sens défini ici peut faire partie d'une carcasse, ou d'un renfort de sommet, ou de tout autre type de renforcement. Ces arceaux peuvent être individualisés par une coupe du fil en cours de pose, ou tous reliés entre eux dans le renforcement final, par exemple par des boucles.

Lorsque l'on définit des positions, des directions ou des sens avec les mots "radialement, axialement, circonférentiellement", ou lorsque l'on parle de rayons, on prend pour repère la forme sur laquelle on fabrique le pneumatique, ou le pneumatique par lui-même. L'axe géométrique de référence est l'axe de rotation de la forme.

De même, comme déjà signalé dans la demande de brevet EP 0 580 055 précitée, les organes de pose du fil décrits ici permettent aussi de réaliser un renforcement dont le pas de pose du fil est variable. On entend par "pas de pose" la distance résultant de la somme de l'écart entre deux fils adjacents et du diamètre du fil. Il est bien connu que pour un renforcement de carcasse, l'écart entre fils varie selon le rayon auquel cet écart est mesuré. Il n'est pas question ici de cette variation, mais bien d'un pas variable à un rayon donné. Il suffit pour cela, sans changer la cadence de travail de l'organe de guidage, de faire varier selon toute loi appropriée la vitesse de rotation de la forme. On obtient ainsi un pneumatique dont les fils de renforcement de carcasse, par exemple pour une carcasse radiale, sont disposés selon un pas présentant une variation contrôlée pour une position radiale donnée.

Fondamentalement, l'invention traite de la dépose en continu d'un fil de renforcement, dans une configuration aussi proche que possible de la configuration visible dans le produit final, c'est à dire dans le pneumatique. Le fil étant délivré à la demande par un distributeur approprié comportant par exemple une bobine de fil et le cas échéant un dispositif de contrôle de la tension du fil extrait de la bobine, l'appareil de fabrication d'un renfort à partir d'un seul fil coopère avec une forme (comme un noyau rigide ou une membrane) sur laquelle on fabrique le pneumatique. Il importe peu que le renforcement soit, pour être complet, fabriqué en plusieurs rotations successives de la forme, avec coupe du fil ou non entre deux rotations.

La suite de la description permet de bien faire comprendre tous les aspects de l'invention, en s'appuyant sur les figures suivantes :
- La figure 1 est une vue schématique plane d'un premier mode de réalisation de l'appareil selon l'invention ;
- La figure 2 est une vue schématique plane d'un autre mode de réalisation de l'appareil selon l'invention ;
- La figure 3 est une vue similaire aux figures 1 et 2 dans laquelle l'organe de pose du fil a été omis ;
- La figure 4 est une vue schématique plane du coté B de la figure 3 ;
- Les figures 5 à 10 montrent une séquence préférée du fonctionnement des moyens presseurs rotatifs ;
- Les figures 11 à 16 montrent un mode de réalisation préféré des moyens presseurs rotatifs et leur mode de fonctionnement.

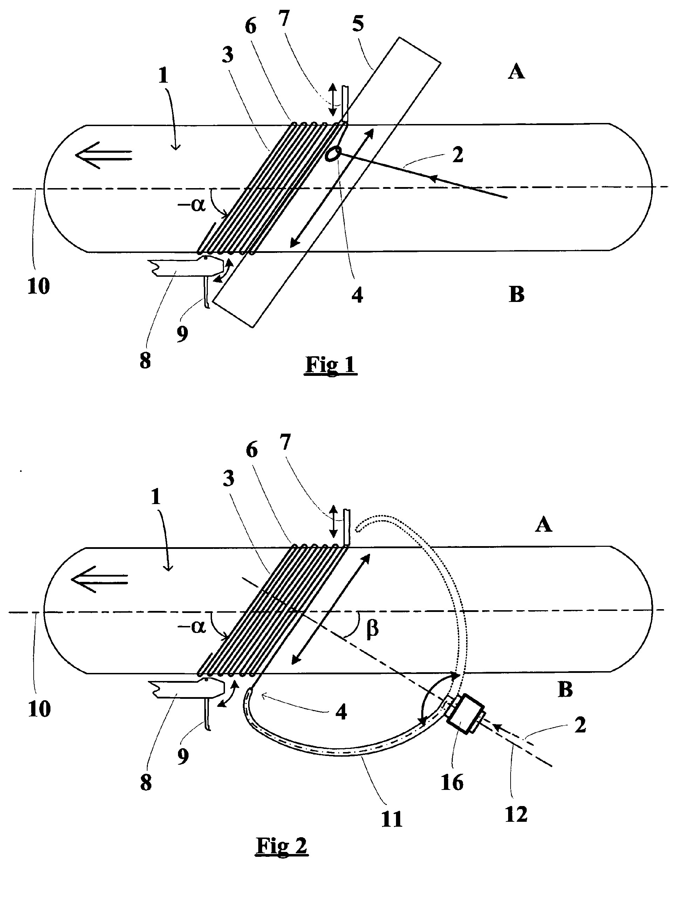

A la figure 1 (ainsi que pour tous les exemples illustrés, sans toutefois que ceci soit limitatif), la forme 1 est un noyau (par exemple rigide et démontable) définissant la géométrie de la surface intérieure du pneumatique. Ce noyau est revêtu de caoutchouc, par exemple d'une couche de gomme d'étanchéité à base de caoutchouc butyl, d'une couche de gomme assurant l'enrobage des fils de carcasse, de fils de carcasse et d'une couche de gomme assurant l'enrobage des renforts de sommet. Cette dernière couche de gomme permet de retenir sur le noyau des arceaux 3 de fil 2 au fur et à mesure de leur dépose, par un effet de collage. Bien entendu, le noyau 1 est entraîné en rotation (dans le sens de la double flèche sur la gauche des figures) par tout dispositif convenable, non représenté. Un organe de guidage 4 (sur cet exemple un oeillet) guide le fil 2.

Le fil est délivré sensiblement en continu et à la demande par un distributeur approprié (non représenté). Des moyens de régulation de la tension du fil (non représentés ici) permettent de contrôler la tension du fil au cours de sa pose. On peut par exemple viser une tension sensiblement constante ou au contraire contrôler la tension pour qu'elle varie en fonction de la position de l'oeillet de guidage dans son mouvement alternatif.

Le déplacement de l'oeillet 4 par rapport au noyau est contrôlé par un organe de pose 5, par exemple du type de celui décrit dans la demande EP 0 580 055. Le fil est ainsi déposé à la surface du noyau sous la forme d'arceaux 3 juxtaposés, la distance entre deux arceaux successifs correspondant au pas de pose. Le pas de pose résulte des vitesses de rotation de la forme 1 et de déplacement de l'oeillet 4.

Les arceaux 3 sont reliés entre eux par des boucles 6. Ces boucles correspondent au point de rebroussement du fil lorsque l'organe de guidage 4 atteint l'une des extrémités axiales de son mouvement. Les arceaux forment un angle "- α" avec le plan médian 10 du noyau 1 et par conséquent avec la direction circonférentielle du futur pneumatique. Sur ces vues planes (figures 1 à 3 en particulier), on a représenté schématiquement un angle - α constant tout au long des arceaux 3. En pratique, cet angle peut varier du fait en particulier des variations du rayon de pose, de la vitesse de déplacement de l'oeillet et de la vitesse de rotation de la forme 1. De manière usuelle dans le métier, lorsque l'on évoque l'angle des arceaux sans précision supplémentaire, on considère l'angle que forme les fils au centre des arceaux. De manière usuelle également, cet angle étant positif lorsque le fil s'écarte du plan médian 10 dans le sens des aiguilles d'une montre et négatif lorsque le fil s'écarte du plan médian 10 dans le sens inverse (comme c'est le cas sur les figures 1 et 2).

A la figure 2, on a représenté un autre mode de réalisation de l'organe de pose. Il s'agit ici d'un balancier 11 dont l'extrémité tubulaire constitue l'organe de guidage 4. Le balancier 11 oscille autour d'un axe de balancier 12 d'un coté à l'autre de la forme 1 comme cela est schématisé sur la figure par la représentation d'une position du balancier en trait plein et d'une autre position en trait pointillé. L'axe du balancier 12 est porté par une embase 16. L'acheminement du fil 2 jusqu'à l'organe de guidage 4 peut être assuré par un passage à l'intérieur du balancier 11. L'axe de balancier 12 forme un angle β avec le plan médian 10 de la forme. Si l'on fait abstraction de l'effet (décrit plus haut) de la vitesse de rotation du noyau, cet angle β est complémentaire de l'angle α (au centre des arceaux), c'est à dire que α + β est sensiblement égal à 90°.

Des moyens presseurs permettent de presser les boucles 6 contre la forme 1. Sur les figures 1 à 3, on a représenté, de part et d'autre de la forme, deux types de moyens presseurs fondamentalement différents. D'un côté (côté A de la forme, c'est à dire au dessus de la forme sur les figures 1 à 3), les moyens presseurs 7 comprennent un ou deux éléments mobiles axialement. Ces éléments sont par exemple les éléments décrits dans la demande EP 1 122 057 (voir en particulier la description des fourche et marteau de la figure 2 de cette demande). De l'autre côté (côté B de la forme, c'est à dire en dessous de la forme sur les figures 1 à 3), les moyens presseurs 8 comprennent au moins un bras presseur rotatif 9. Comme cela est bien visible sur les figures, le mouvement d'approche et d'appui du bras presseur 9 est un mouvement rotatif alors que le mouvement du moyen presseur 7 est un mouvement de translation sensiblement axiale.

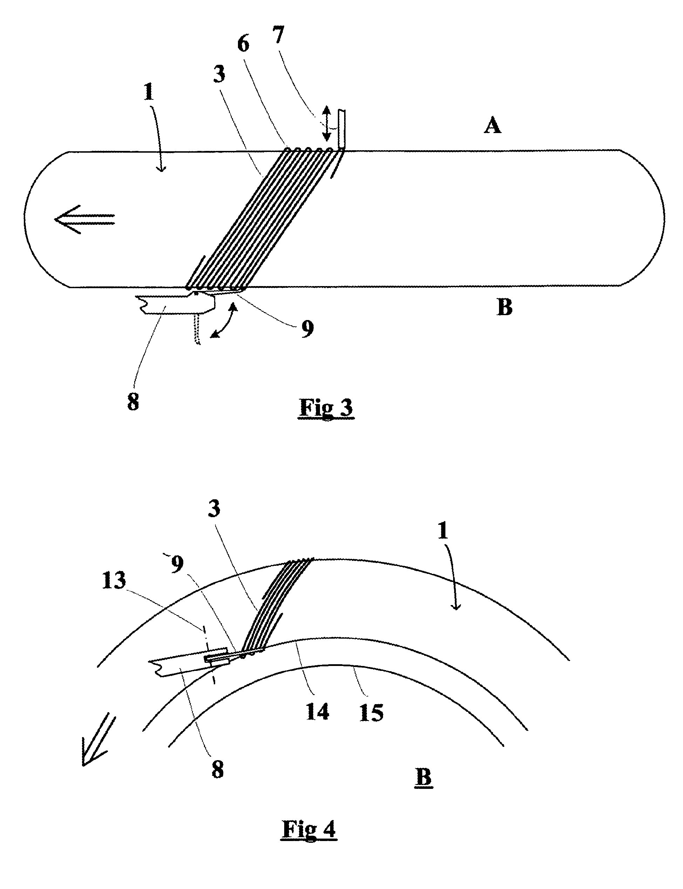

Les figures 3 et 4 montrent plus spécifiquement ces moyens presseurs et en particulier les moyens presseurs rotatifs 8. A la figure 3, le bras rotatif 9 est représenté en position d'appui contre la forme 1. Sa position repliée est visible en trait pointillé. A la figure 4, c'est à dire en vue depuis le coté B, on voit que la rotation entre ces deux positions s'effectue autour d'un axe 13 pratiquement radial et parallèle au plan médian de la forme. En pratique, l'orientation de l'axe 13 peut être choisie dans une large gamme. Un élément de ce choix est bien sûr l'inclinaison de la surface de la forme au point de plaquage des boucles 6 sur la forme 1. Sur l'exemple représenté, les arceaux 3 constituent les renforcements de sommet d'un pneumatique dont le profil est proche d'un arc de cercle comme c'est le cas pour un pneumatique pour moto. Si les arceaux s'étendent comme ici jusqu'au cercle 14 des points axialement les plus extérieurs de la forme, un axe de rotation 13 parallèle au plan médian de la forme 10 peut être préféré. Si l'on imagine que les arceaux 3 constituent un renforcement de carcasse (radiale ou non), c'est dire qu'ils s'étendent au-delà du cercle 14 et jusqu'au talon 15 du pneumatique, on préférera une orientation de l'axe 13 qui ne soit pas parallèle au plan médian de la forme.

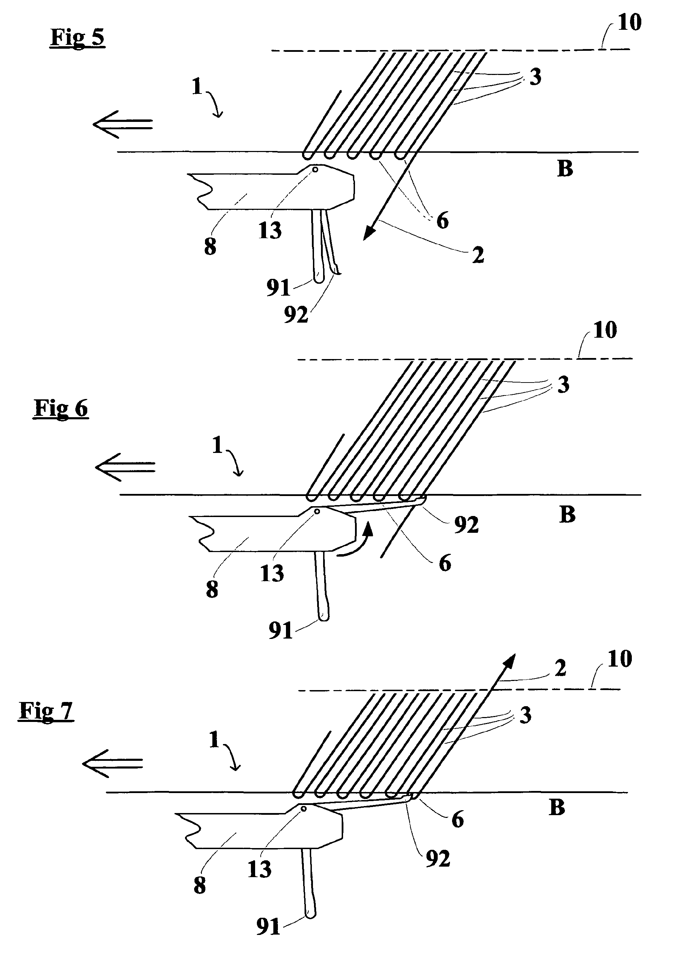

La série des figures 5 à 10 correspond à un mode de fonctionnement particulièrement intéressant de l'appareil de l'invention. Ces vues de détail correspondent au grossissement de la partie des figures 1 à 3 concernant les moyens presseurs rotatifs 8. On y voit un mode de réalisation particulier des moyens presseurs rotatifs 8 comprenant deux bras rotatifs. L'un de ces bras porte à son extrémité un marteau 91 et l'autre bras porte à son extrémité un crochet 92. Ils peuvent pivoter indépendamment l'un de l'autre autour du même axe 13. La forme 1 est matérialisée par la ligne de rebroussement 14 correspondant aux extrémités des arceaux 3. Les arceaux ne sont représentés qu'en partie.

La séquence des figures 5 à 10 illustre un mode de fonctionnement préféré de l'appareil.

A la figure 5, les deux bras presseurs sont dégagés de la forme 1. Un arceau 3 du fil 2 est déposé par les organes de pose (non représentés) du côté A vers le côté B de la forme.

A la figure 6, le crochet 92 vient au contact de la forme 1 au niveau de la ligne de rebroussement en chevauchant le fil 2.

A la figure 7, le crochet 92 demeure appliqué contre la forme, maintient le fil alors que les organes de pose ont commencé à former un nouvel arceau 3. Ceci à pour effet de créer une nouvelle boucle 6.

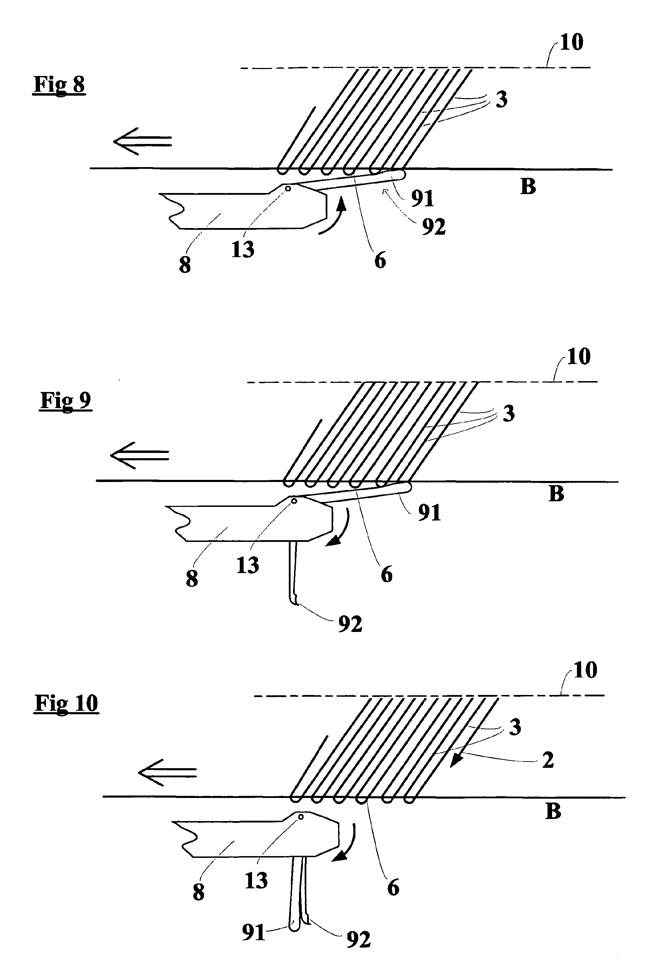

A la figure 8, alors que le crochet 92 demeure appliqué contre la forme, le marteau 91 porté par le bras frappeur vient à son tour plaquer le fil contre la forme, de préférence en le frappant de manière à favoriser son adhésion. Avantageusement, le marteau agit au dessus du crochet, c'est à dire sur la partie de l'arceau qui se situe entre le crochet et le plan médian de la forme. Autrement dit, le marteau agit de préférence en un point du fil situé radialement à l'extérieur du point de contact du bras presseur portant le crochet 92.

A la figure 9, le crochet 92 est dégagé de la forme alors que le marteau 91 demeure avantageusement appliqué contre la forme.

A la figure 10, le bras frappeur (marteau 91) est dégagé à son tour de la forme. La situation est maintenant de nouveau très proche de celle de la figure 5. L'organe de pose a, au cours de ce cycle, parcouru un aller-retour par rapport à la forme et la pose d'une paire d'arceaux a été complètement effectuée.

On comprend bien que l'appareil de l'invention peut également ne comporter qu'un seul bras presseur rotatif comme représenté aux figures 1 à 4. En effet, en fonction par exemple des caractéristiques d'adhésion du fil sur la forme, du profil de la forme ou de la tension du fil, il peut être suffisant d'utiliser un bras presseur rotatif unique. De préférence, le bras rotatif unique comporte alors une extrémité en forme de crochet.

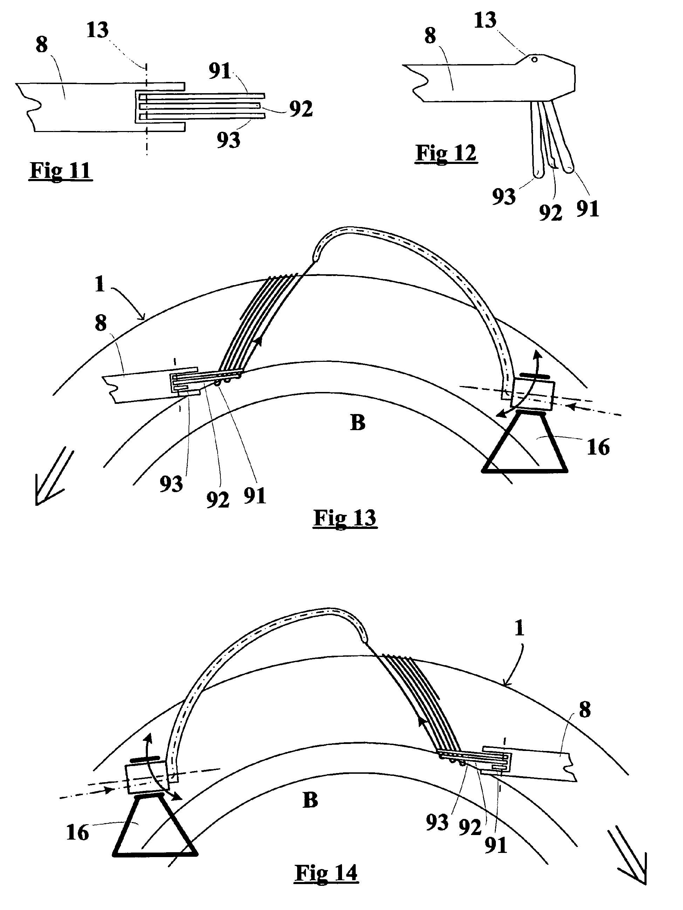

Aux figures 11 et 12, on a représenté un autre mode de réalisation des moyens presseurs rotatifs 8. Comme on peut le voir, cette variante comprend trois bras rotatifs. Deux de ces bras sont des bras frappeurs et portent chacun à son extrémité un marteau (91, 93) et le troisième bras porte à son extrémité un crochet 92. Ces trois bras peuvent pivoter indépendamment l'un de l'autre autour du même axe 13. En pratique, ces moyens presseurs peuvent fonctionner exactement comme décrit dans les figures 5 à 10, étant observé que pour la fabrication d'un premier renforcement, seul un premier marteau (91 sur la figure 11) situé au dessus du crochet 92 est opérationnel. Le deuxième marteau 93 demeure dégagé et inactif. Le deuxième marteau 93 ne devient actif que lors de la fabrication d'un second renforcement incliné dans le sens opposé par rapport au premier. Pour cela les moyens presseurs 8 sont positionnés à l'inverse.

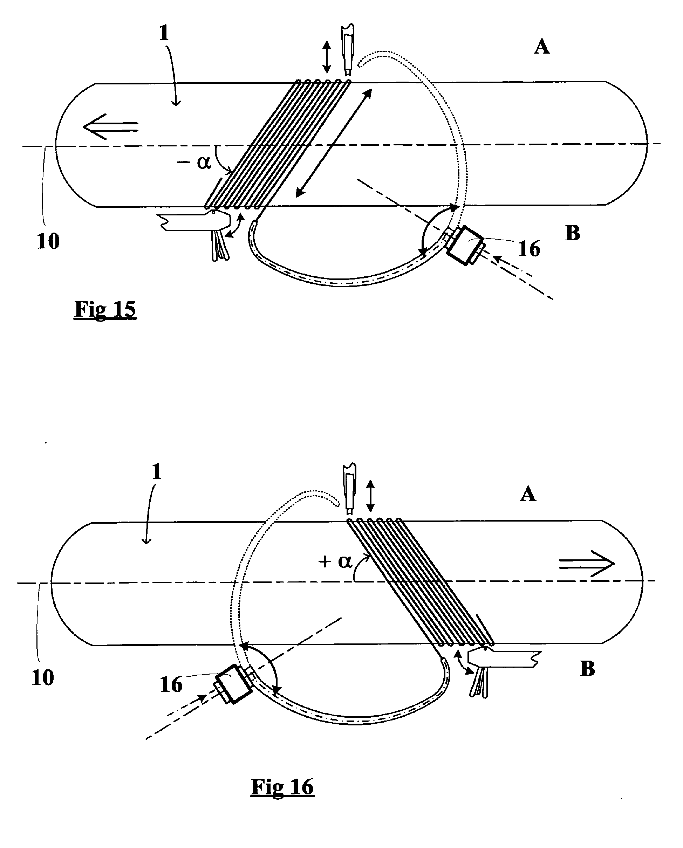

Cette possibilité d'inversion est représentée aux figures 13 à 16. Les figures 13 et 15 montrent la pose d'un premier renforcement incliné selon un angle - α comme sur les figures 1 à 10. Pour cela, vu depuis le côté B, la forme 1 tourne vers la gauche de la figure (voir double flèche), les moyens presseurs rotatifs 8 se situent à gauche de la figure et l'embase de l'organe de pose se situe à droite. Les figures 14 et 16 montrent la pose d'un deuxième renforcement incliné selon un angle + α, c'est à dire à l'inverse des figures 1 à 10. Pour cela, vu depuis le côté B, la forme tourne vers la droite de la figure (voir double flèche), les moyens presseurs rotatifs 8 se situent à droite de la figure et l'embase de l'organe de pose à gauche. On voit que le marteau inférieur est chaque fois dégagé et inactif, ce marteau inférieur inactif étant tantôt le marteau 93 (figure 13), tantôt le marteau 91 (figure 14). Un avantage de cette possibilité d'inversion est naturellement de réaliser un appareillage particulièrement simple puisque l'on peut poser indifféremment des renforcements radiaux, inclinés ou croisés en utilisant les mêmes moyens de pose et les mêmes moyens presseurs, ces moyens opérant depuis le même côté de la forme.

Bien sûr, on peut également utiliser des moyens presseurs rotatifs des deux côtés (A et B sur les figures) de la forme. Ceci peut permettre des variations d'inclinaison des renforcements et des conceptions de l'organe de pose encore plus libre. On comprend cependant que ceci n'est pas indispensable pour l'invention, l'essentiel étant qu'un côté soit équipé de moyens presseurs rotatifs.

## Revendications

1. Appareil de fabrication d'un renforcement pour pneumatique, ledit appareil étant destiné à fabriquer un renforcement constitué à partir d'un fil (2) délivré sensiblement en continu et à la demande par un distributeur approprié, ledit appareil étant destiné à être utilisé en coopération avec une forme (1) sensiblement toroïdale sur laquelle on construit progressivement ledit renforcement en déposant des arceaux (3) dudit fil selon une trajectoire souhaitée pour ledit fil à la surface de ladite forme,
ledit appareil comprenant :
• un organe de guidage (4) du fil dans lequel le fil peut coulisser,
• des moyens (5) pour déplacer ledit organe de guidage en regard de la trajectoire souhaitée pour ledit fil,
• des premier et deuxième moyens presseurs (7, 8) disposés respectivement de part et d'autre de la forme et capable de venir maintenir le fil contre la forme sensiblement aux extrémités (6) desdits arceaux,
ledit appareil étant **caractérisé en ce que** les moyens presseurs comprennent, au moins d'un côté (B) de la forme, un bras presseur rotatif (9) dont le mouvement rotatif s'effectue entre une position repliée, éloignée de la forme et une position d'appui contre la forme.

2. Appareil selon la revendication 1 dans lequel la trajectoire est constituée d'allers et de retours sensiblement parallèles entre eux et formant un angle (α, - α) avec la direction circonférentielle (10) de la forme, cet angle étant inférieur à 90°.

3. Appareil selon la revendication 2 dans lequel cet angle est inférieur à 45°.

4. Appareil selon l'une des revendications précédentes dans lequel ledit bras presseur rotatif (9) est mobile en rotation autour d'un axe (13) sensiblement parallèle au plan médian (10) de la forme.

5. Appareil selon l'une des revendications précédentes dans lequel ledit bras presseur rotatif est mobile en rotation autour d'un axe (13) orienté sensiblement radialement.

6. Appareil selon l'une des revendications 2 à 5 dans lequel les moyens pour déplacer l'organe de guidage (4) comprennent un balancier (11) à mouvement alternatif de rotation autour d'un axe de balancier (12) formant un angle "β" avec le plan médian de la forme, β étant sensiblement complémentaire de l'angle (α, - α) que forment les arceaux (3) avec la direction circonférentielle de la forme.

7. Appareil selon la revendication 6, le balancier étant monté pivotant sur une embase (16), dans lequel les moyens presseurs (8) disposés du côté (B) de la forme où se situe ladite embase comprennent ledit bras presseur rotatif.

8. Appareil selon l'une des revendications précédentes dans lequel un premier bras frappeur rotatif (91) est en outre associé au bras presseur rotatif (92), ledit premier bras frappeur rotatif étant apte à frapper le fil lorsqu'il est maintenu contre la forme par le bras presseur.

9. Appareil selon la revendication 8, dans lequel, ledit premier bras frappeur rotatif est disposé de manière à pouvoir frapper le fil contre la forme en un point de la forme situé radialement à l'extérieur du point de contact du bras presseur rotatif sur la forme lors de la pose d'un premier renforcement.

10. Appareil selon la revendication 9, dans lequel un deuxième bras frappeur rotatif (93) est en outre associé au bras presseur rotatif, ledit deuxième bras frappeur rotatif étant disposé de manière à pouvoir frapper le fil en un point situé radialement à l'extérieur du point de contact du bras presseur rotatif lors de la pose d'un second renforcement, ledit second renforcement étant incliné sensiblement à l'inverse du premier renforcement.

## Claims

1. An apparatus for producing a pneumatic tire reinforcement, said apparatus being intended to produce a reinforcement consisting of a cord (2) delivered substantially continuously and on demand by an appropriate delivery device, said apparatus being intended to be used in cooperation with a substantially torroidal former (1) on which said reinforcement is progressively built up by depositing arches (3) of said cord along a desired path for said cord on the surface of said former,
said apparatus comprising:
• a cord guide (4) in which the cord can slide;
• means (5) for moving said guide opposite the desired path for said cord; and
• first and second pressing means (7, 8) placed respectively on either side of the former and capable of keeping the cord against the former substantially at the ends (6) of said arches,
said apparatus being **characterized in that** the pressing means comprise, at least on a side (B) of the former, a rotary pressing arm (9) rotating between a folded position remote form the former and a pressing position against the former.

2. The apparatus as claimed in claim 1, in which the path consists of to-and-fro movements substantially parallel to one another and making an angle (α, - α) with the circumferential direction (10) of the former, this angle being less than 90°.

3. The apparatus as claimed in claim 2, in which this angle is less than 45°.

4. The apparatus as claimed in one of the preceding claims, in which said rotary pressing arm (9) can rotate about an axis (13) substantially parallel to the mid-plane (10) of the former.

5. The apparatus as claimed in one of the preceding claims, in which said rotary pressing arm can rotate about an axis (13) oriented substantially radially.

6. The apparatus as claimed in one of claims 2 to 5, in which the means for moving the guide (4) comprises a rocker (11) undergoing an alternating rotational movement about a rocker axis (12) making an angle β with the mid-plane of the former, β being substantially complementary to the angle (α, - α) that the arches (3) make with the circumferential direction of the former.

7. The apparatus as claimed in claim 6, the rocker being mounted so as to pivot on a support (12), in which the pressing means (8) placed on the side (B) of the former where said support is located comprise the rotary pressing arm.

8. The apparatus as claimed in one of the preceding claims, in which a first rotary striking arm (91) is furthermore associated with the rotary pressing arm (92), said first rotary striking arm being capable of striking the cord when it is held against the former by the pressing arm.

9. The apparatus as claimed in claim 8, in which said first rotary striking arm is placed so as to be able to strike the cord against the former at a point on the former located radially to the outside of the point of contact of the rotary pressing arm on the former during the laying of a first reinforcement.

10. The apparatus as claimed in claim 9, in which a second rotary striking arm (93) is furthermore associated with the rotary pressing arm, said second rotary striking arm being placed so as to be able to strike the cord at a point located radially to the outside of the point of contact of the rotary pressing arm during laying of a second reinforcement, said second reinforcement being inclined substantially at the reverse of the angle of the first reinforcement.

## Patentansprüche

1. Gerät zur Herstellung einer Verstärkung für einen Luftreifen, wobei das Gerät dazu bestimmt ist, eine Verstärkung ausgehend von einem Draht (2) herzustellen, der im Wesentlichen kontinuierlich und nach Bedarf von einem geeigneten Verteiler geliefert wird, wobei das Gerät dazu bestimmt ist, in Zusammenwirkung mit einer im Wesentlichen wulstförmigen Form (1) verwendet zu werden, auf der die Verstärkung progressiv aufgebaut wird, indem Bögen (3) des Drahts gemäß einer für den Draht gewünschten Bahn auf die Oberfläche der Form aufgebracht werden,
wobei das Gerät enthält:
• ein Führungsorgan (4) für den Draht, in dem der Draht gleiten kann,
• Einrichtungen (5), um das Führungsorgan gegenüber der für den Draht gewünschten Bahn zu verschieben,
• erste und zweite Presseinrichtungen (7, 8), die zu beiden Seiten der Form angeordnet und fähig sind, den Draht im Wesentlichen an den Enden (6) der Bögen gegen die Form zu halten,
wobei das Gerät **dadurch gekennzeichnet ist, dass** die Presseinrichtungen mindestens auf einer Seite (B) der Form einen drehenden Pressarm (9) aufweisen, dessen Drehbewegung zwischen einer von der Form entfernten, umgeklappten Stellung und einer Auflagestellung gegen die Form erfolgt.

2. Gerät nach Anspruch 1, bei dem die Bahn aus zueinander im Wesentlichen parallelen Hin- und Rückwegen besteht, die einen Winkel (α, -α) mit der Umfangsrichtung (10) der Form bilden, wobei dieser Winkel kleiner als 90° ist.

3. Gerät nach Anspruch 2, bei dem dieser Winkel kleiner als 45° ist.

4. Gerät nach einem der vorhergehenden Ansprüche, bei dem der drehende Pressarm (9) um eine Achse (13) im Wesentlichen parallel zur Mittelebene (10) der Form drehbeweglich ist.

5. Gerät nach einem der vorhergehenden Ansprüche, bei dem der drehende Pressarm um eine im Wesentlichen radial ausgerichtete Achse (13) drehbeweglich ist.

6. Gerät nach einem der Ansprüche 2 bis 5, bei dem die Einrichtungen zum Verschieben des Führungsorgans (4) einen Schwenkhebel (11) mit wechselnder Drehbewegung um eine Schwenkhebelachse (12) aufweisen, die einen Winkel "β" mit der Mittelebene der Form bildet, wobei β im Wesentlichen zum Winkel (α, -α) komplementär ist, den die Bögen (3) mit der Umfangsrichtung der Form bilden.

7. Gerät nach Anspruch 6, wobei der Schwenkhebel schwenkbar auf einen Sockel (16) montiert ist, bei dem die Presseinrichtungen (8), die auf der Seite (B) der Form angeordnet sind, wo sich der Sockel befindet, den drehbaren Pressarm enthalten.

8. Gerät nach einem der vorhergehenden Ansprüche, bei dem ein erster drehender Schlagarm (91) außerdem dem drehenden Pressarm (92) zugeordnet ist, wobei der erste drehende Schlagarm fähig ist, den Draht zu schlagen, wenn er vom Pressarm gegen die Form gehalten wird.

9. Gerät nach Anspruch 8, bei dem der erste drehende Schlagarm so angeordnet ist, dass er den Draht an einem Punkt der Form gegen die Form schlagen kann, der sich radial außerhalb des Kontaktpunkts des drehenden Pressarms auf der Form beim Aufbringen einer ersten Verstärkung befindet.

10. Gerät nach Anspruch 9, bei dem ein zweiter drehender Schlagarm (93) außerdem dem drehenden Pressarm zugeordnet ist, wobei der zweite drehende Schlagarm so angeordnet ist, dass er den Draht an einem Punkt schlagen kann, der sich radial außerhalb des Kontaktpunkts des drehenden Pressarms beim Aufbringen einer zweiten Verstärkung befindet, wobei die zweite Verstärkung im Wesentlichen entgegengesetzt zur ersten Verstärkung geneigt ist.
